# EUROPEAN PATENT APPLICATION

(11) **EP 3 406 823 A1**
(43) Date of publication of application: **28.11.2018**
(21) Application number: 18177225.2
(22) Date of filing: 04.02.2016
(51) Int. Cl.: E04F 15/02, A47K 3/40, E03F 5/04, E04B 5/48

(54) **A DRAINAGE HOLE FLOOR MODULE**

(30) Priority: 10.02.2015 SE 1550149
(62) Divisional of application: 16749539.9
(71) Applicant: Karlsson, Benny, 136 61 Haninge (SE); Sandberg, Ronny, 136 65 Haninge (SE); Näslund, Christian, 128 66 Sköndal (SE)
(72) Inventor: Karlsson, Benny, 136 61 Haninge (SE); Sandberg, Ronny, 136 65 Haninge (SE); Näslund, Christian, 128 66 Sköndal (SE)
(74) Representative: Zacco Sweden AB

(57) **Abstract**

A drainage hole floor module system (1) with a modular plate member (1) per se. The plate member (5) comprising a thermosetting polymer. The member (5) has an extended lower surface (9) and an extended upper sloping surface (17) converging to an apex point (AP). The member has a permanently joined drainage pipe (19), wherein an upper end (45) of said drainage pipe (19) is positioned at said apex point (AP) and is made of the same material than the plate member.

## Description

### TECHNICAL FIELD

The present invention relates to a method of production of a drainage hole floor module for installation in a floor structure according to claim 1 and to a drainage hole floor module system according to claim 6.

The invention regards waste water floor modules, and manufacture and installation of such modules. The invention is related to construction industry and buildings or similar. It is also related to manufacture of sanitary cubicle units, but is not limited to such.

### BACKGROUND ART

Today waste water flooring structures in buildings are often produced at the building site. The supper sloping surface thus being produced at the building site and the drainage pipe and gully being mounted to the flooring structure at the building site as well. This implies that carelessness or errors due to lack of time or misunderstanding and work under pressure may occur which may cause misassembly. The waste water drainage pipe may be wrongly positioned with minor displacement relative the plumbing system connection point and other predetermined fixing points at the building site. Clamping rings may be misplaced or otherwise wrongly arranged leading to waste water leakage into the floor structure. An error possibility in mounting is also often the case when screeding work is not sufficiently made, wherein cavities may occur beneath and in between the drainage pipe upper flange. Such error may imply that the inclining surface inclines upwards instead of downwards resulting in that the waste water does not run-off. A further error possibility is that mounting of a water proof floor covering membrane joining the inclining upper surface and the interior of the waste water gully is wrongly clamped thereto due to erroneous cutting the membrane or eventually misconstructed clamping device. Such inclination ascent and defect membrane may result in that waste water will be trapped and probably leak into the floor structure.

Water-damages in floor structures today involve high restoration costs due to the above-mentioned misconstructions and wrongly mounting.

Today, research and development efforts are present for solving the problems stated above as they strongly influence the public finances. For example, if said water-damage occurs at a high floor plan of a many-storied building, the costs are way-out accumulated for restoration because the floor plans below the origin water-damage are subjected to waste water and the entire building must be restored.

US 2011/0088160 describes a former for creating a sloping profile for waste-water run-off. This construction still uses clamps and screws for mounting of water-proof covering materials.

It is desirable to provide a cost-effective and fail-safe method of installation of a drainage hole floor module in a floor structure of a building site.

It is further desirable to provide a drainage hole floor module that is simple to mount and that provides a waterproof waste-water run-off floor also in the vicinity of the drainage pipe.

It is desirable to provide a drainage hole floor module that is robust and that will not produce **structure**-borne **sound** transmission.

A further object is also to eliminate drawbacks of known techniques and improve the technical properties of known modules.

### SUMMARY OF THE INVENTION

This has been achieved by a method defined in the introduction being characterized by the features of claim 1.

By this way is provided a method to produce a floor of a building site, wherein the extension of the floor is designed with a predetermined slope (produced in a controlled manner) converging to a drainage pipe member (a through hole aperture), wherein the method for producing the floor is cost-effective, failure proof against defects such as incorrect inclination of said slope, against waste-water leakage due to misassembly of complex prior art systems of membranes, clamping rings, separate pipes etc.

Thereby it is achieved that cost-effective installation can be made by simplified mounting of the floor module to the floor structure and easy connecting the building site plumbing system to the drainage member (and thereby to the upper sloping surface).

By this means is thus provided an effective mounting as there is no longer any need of using labour intensive installation procedures and different professions and various corporations of installation personnel.

In this way is also achieved a controlled way to produce a floor module in series production, which floor module always comprises proper predetermined inclination of sloping surface at the same time as there is achieved a guaranteed water-proof interface between the plate member and the drainage pipe outer envelope side (partly or entirely) for drainage of the waste water (waste water run-off from the upper sloping surface into the drainage pipe).

The drainage hole floor module can be cost-effectively produced. It can be transported piecewise or as bulk cargo to the building site.

Thereby is achieved that subsequently an easy mounting of surrounding floor elements edge-to-edge with the floor module plate member can be made. There is no need of any additional assembly of waterproof floor covering or wet floor covering material or other membrane mounting,

The surrounding floor elements may have a sloping surface as well depending upon application.

Preferably, the height of the plate member relative the wideness of the plate member being in ratio 0, 1 (1/10) - 0, 2 (2/10), preferably 0, 05 (1/20) - 0, 25 (5/20). In such way the plate member will be stable in position after mounting due to its own weight. Such rigid plate member is also cost-effective to manufacture and no ribs or spars or other stiffeners/bars have to be formed onto the lower side of the plate member.

Suitably, the thickest portion of the plate member exhibits a thickness about 25 - 60 mm, preferably 30 - 50 mm.

Preferably, the thinnest portion of the plate member exhibits a thickness about 15 - 50 mm, preferably 20 - 40 mm.

Suitably, the thickest portion exhibits a thickness that is adapted to be of larger thickness than that of the surrounding floor elements.

In such way smoothing compound can be applied smoothly onto the surrounding floor elements achieving a smooth surface mating with the upper surface of the module plate member.

Alternatively, a sealing member (e.g. a sealing tape) is applied over the junction between the edge region of the plate member and the edge of the surrounding floor element.

Preferably, the weight of the plate member module is about 15 to 30 kg, suitably 20-25 kg.

In this way is achieved a rigid moulded plate member of e.g. epoxy avoiding **structure-**borne **sound** transmission through the plate.

By this way is achieved that no waste water will flow in a direction opposite the run-off direction.

Thereby is achieved that the upper sloping surface inclination can be determined beforehand at the work-shop in the manufacture of the drainage hole floor module.

The inclination will thus never be steep or too level.

In such way there is possible to position the drainage pipe centrally spatially in plane and in a predetermined position relative the edge region of the plate member.

By this way it is guaranteed that the drainage pipe (gully device) always exhibits its centre axis along the vertical.

Preferably, the inclination angle of the upper sloping surface being in ratio 0, 025 (1/40) - 0, 005 (1/200), preferably 0, 02 (1/50) - 0, 01 (1/100).

For example, a ratio of 1/50 will imply that a distance of 500 mm in horizontal plane means that a sloping surface being 10 mm lower relative the horizontal plane in one end than the other end of the surface projected to said distance.

Preferably, the drainage pipe extends through the plate member from said apex point to said lower surface. The drainage pipe is bonded by intermolecular forces (rigidly) to an inner wall of a through-hole aperture the plate member.

Thereby is achieved a cost-effective manufacture in the forming step at the same time as the interface between the drainage pipe envelope surface and the plate member will be sealed. The inventors of the present invention take into account the fact that material of the drainage pipe must be a material that together with the thermosetting polymer provides an adhesion attraction process, wherein the thermosetting polymer and the drainage pipe material cling together providing a strong and tight adhesion by intermolecular forces.

Suitably, the thermosetting polymer comprises epoxy and the drainage pipe envelope surface comprises stainless steel.

In such way is achieved a strong bond as for example epoxy and stainless steel interact extremely well with each other regarding the bonding property.

Preferably, the entire drainage pipe comprises stainless steel.

The epoxy is preferably a two component thermosetting plastic and comprises reinforcement elements as filler and/or reinforcement of the plate member.

The inventors of the present invention take into account that use of stainless steel of the drainage pipe will make the drainage hole floor module ready for long-life application at the same time as the drainage pipe being sealed to the plate member in a simple production step, wherein the boundary between the drainage pipe envelope surface and the epoxy forms a highly keyed interface providing an extremely strong and tight physical bond between the both components.

Thereby, the step of installation of said plate member to the floor structure at the building site will require just a few number of mounting operations.

By this means is achieved time saving in installation and the design of the plate member module eliminates misassembly in installation work.

As the interface between the drainage pipe and the plate member is sealed in a reliable way, the floor structure and other parts of the building site will be protected from water or moisture damage during use of the drainage hole floor module.

Preferably, the drainage pipe exhibits standardized interior measure.

By this means there is achieved that standardized tolerances of floor drain inserts and waste collection traps and other units can be positioned in the drainage pipe upper end.

Suitably, the drainage pipe extends a predetermined distance from the lower side of the plate member.

Thereby is achieved that the drainage pipe lower end properly can be joined to the plumbing system of the building site at the same time as a water-proof interface between the drainage pipe and the floor is achieved without any additional assembly of pipes and membranes. The drainage pipe suitably protrudes from the lower surface of the plate member and the lower end of the drainage pipe is preferably positioned at a distance from the lower surface of the plate member, onto which lower end a connection coupling is mounted for fluid communication with the plumbing system.

Preferably, the forming step is preceded by a step of preparation of the envelope surface of the drainage pipe.

The preparation (cleaning, grinding etc.) of the drainage pipe envelope surface prior to bonding provides high effect on the strength and quality of the drainage hole floor module. There are various methods to achieve sufficient metal-surface preparation.

In such way is achieved proper adherence between the thermosetting polymer of the plate member and the drainage pipe.

Suitably, the forming step is followed by a step of curing said plate member.

Preferably, the forming step comprises applying reinforcement elements to the plate member for strengthening the thermosetting polymer.

Thereby is achieved that the plate member is made extremely strong and provides a long-life sealing between the thermosetting polymer and the drainage pipe.

Suitably, the method of producing the plate member can be made by resin transfer infusion moulding into dry reinforcement elements.

Alternatively, the method comprises lay-up of pre-impregnated composite fibres in tapes laid upon each other and joining the outer envelope surface of the drainage pipe for making a water-proof seal between the latter and the thermosetting polymer of the plate member and subsequently the lay-up being cured.

The moulding may use wet resin with dry fibre and/or sand and/or nano-sized fiber-like elements for the manufacture of rigid composite plastic plate member.

The method of producing the plate member may of course use other procedures for forming the plate member comprising thermosetting polymer (e.g. epoxy) and reinforcement elements.

Suitably, the installation step comprises a procedure of coupling the drainage pipe to a plumbing system, and a procedure of mounting a surrounding floor element edge-to-edge with the drainage hole floor module.

Alternatively, the surrounding floor element comprises a thermosetting polymer. Of course, more than one floor element may be made of thermosetting polymer covering (mounted onto) the floor structure of the building site and surrounding the drainage hole floor module.

The plumping waste water system of the building sites can thereby be connected to the drainage pipe member of the plate member in an efficient way without any additional seal mounting between the plate member and the plumbing system. By the procedure of mounting one or several surrounding floor elements edge-to-edge with the drainage hole floor module and mounting all floor elements (comprising particle boards or others) in an individual room of the building site, a floor is provided which can be used in a bath-room, garage, kitchen, supermarket, airport terminal, slaughterhouse, swimming complex, laundry room, or others.

This is also solved by a drainage hole floor module system as defined in the introduction, wherein the system comprises the features of claim 6.

Preferably, the lower surface of the plate member extends along a horizontal surface plane corresponding with a horizontal plane and the lower surface is even with that horizontal surface plane. The inclination angle of the upper sloping surface of the plate member relative the horizontal plane (as being parallel or coplanar with the horizontal surface plane) will thereby always exhibit the predetermined angel relative the horizontal surface plane. For example, the horizontal plane of the building site is defined as 0 degree and the inclination angle of the upper sloping surface of the plate member relative the horizontal surface plane of the plate member is made in ratio 1/50 during production of the plate member in series production. As the plate member is formed with an even lower surface for mounting (partly or entirely) (corresponding with the horizontal surface plane) and as its extension corresponds with the horizontal plane of the building site when mounted, also the inclination angle relative the horizontal plane of the building site automatically will be 1/50 relative the horizontal plane of the building site.

Suitably, the drainage pipe member is formed as a through hole comprising a drainage pipe, which in a sealed manner is rigidly and permanently bond to the through hole inner side.

The through hole is preferably formed by the envelope surface of the drainage pipe during the moulding of the plate member in series production and thereby is achieved a tight seal between the plate member and drainage pipe. The drainage pipe is rigidly and permanently bonded in a sealed manner to the through hole inner side.

The drainage pipe may be formed as a through hole comprising a wall of thermosetting polymer.

Suitably, the drainage pipe comprises an anchoring element radially protruding into said through hole inner side.

In such way is achieved that the drainage pipe is secured in axial direction and rigidly bond to the plate member.

Preferably, the plate member further comprises reinforcement elements embedded in the thermosetting polymer, which elements comprises carbon fibres and/or micro balloons and/or glass fibres and/or fibre-like nano elements and/or sand.

Alternatively, the reinforcement elements and/or other embedded elements are conductive for conducting heat and/or current.

In such way is achieved a plate member comprising underfloor heating.

By providing a drainage hole floor module system including a plate member comprising a thermosetting polymer (e.g. epoxy) and a drainage pipe of stainless steel (or other type drainage pipe made of other suitable material such as brass, plastic composite of thermosetting polymer comprising carbon and/or glass fibre etc. that interacts with the epoxy of the plate member) and the coupling device, wherein the lower surface of the plate member being spatially determined in plane relatively the inclination angle of the upper sloping surface, cost-effective installation is achieved.

Preferably, the system comprises lower surfaces of the plate member adapted for mounting to the floor structure (e.g. upper sides of beams in a system of joists). The edge region of the plate member is partly or entirely adapted for edge-to-edge mounting to a separate floor element or elements, which also being adapted to be mounted onto the above-mentioned floor structure.

Suitable, the plate member is produced in series production as a modular unit.
Depending upon the application of the module system, the module unit may exhibit various standardized measurement, such as 900 mm x 900 mm or 600 mm x 900 mm in wideness and the thickness of the module unit (plate member) is selected for avoiding **structure-borne sound** transmission through the plate.

By using a thermosetting material for achieving the structural property of the modular plate member, the latter will be of low weight and thereby promote easy handling at the building site. Furthermore, by using the thermosetting material, also a proper structural bond will be achieved between the plate member material and the envelope surface of the drainage pipe made of stainless steel.

Preferably, the drainage pipe comprises a demountable waste collection trap and a grid member.

This is also solved by a modular plate member of a drainage hole floor module system according to any of the preceding claims, wherein the modular plate member comprises a thermosetting polymer and exhibits a flat spatial geometry forming an edge region and an extended lower surface and an extended upper sloping surface converging to an apex point, the lower surface is provided with a horizontal surface plane floor structure mounting area, wherein the upper sloping surface exhibits a predetermined inclination relative the horizontal surface plane, a drainage pipe extending from said apex point through the plate member and is waterproof bonded thereto, the drainage pipe extends from the upper surface to the lower surface or further below the plate member and comprises a plumbing system coupling device.

The horizontal floor structure surface plane mounting area of the modular plate member will have an extension in plane corresponding with the horizontal plane of the building site when mounted onto the floor structure. As the upper sloping surface exhibits a predetermined inclination relative the horizontal floor structure surface plane mounting area of the modular plate member (which is determined in the process of moulding the plate member) and the horizontal floor structure surface plane mounting area of the modular plate member is in plane with the horizontal plane of the building site after mounting, also the inclination of the sloping surface will automatically turn out to be within standardized tolerances for that building. In such way proper run-off of waste water is achieved.

The apex point can be defined as a point determined by an intersection between an axial centre line of the drainage pipe and an imaginary plane extending horizontally from the lowest position of the sloping surface (i.e. the position of the sloping surface being nearest the drainage pipe and/or in the position of the sloping surface where run-off waste water exits the sloping surface. The apex point could also be defined as a point below that intersection.

Suitably, the axial centre line is oriented perpendicular to the plane of the lower surface.

Preferably the drainage pipe extends from said apex point beyond said lower surface forming a lower end comprising an end section arranged for a plumbing system coupling device.

In such way is provided a modular plate member that can be coupled to the plumping system in a cost-effective and safe way.

Preferably, the plate member constitutes one single block.

Suitably, the plate member is made in one piece.

Suitably, the drainage hole floor module may be called drainage hole floor module system or vice versa.

Preferably, the drainage hole floor module may be called drainage hole floor module system or vice versa.

Suitably, the modular plate member may be called drainage hole floor module or vice versa.

Preferably, the modular plate member may be called plate member or vice versa.

Suitably, the modular plate member may be called drainage hole floor module or vice versa.

Preferably, the plate member comprises the thermosetting polymer arranged homogeneously seen in a direction from the extended lower surface up to the extended upper sloping surface, wherein in the drainage pipe extends through the thermosetting polymer.

This is also solved by a method of production of a drainage hole floor module in a floor structure of a building site, the method comprises the steps of: providing a forming tool for manufacture of a plate member comprising a thermosetting polymer; forming of said plate member in said forming tool into a flat spatial geometry having an extended lower surface and an extended upper sloping surface converging to an apex point and in the same forming step permanently joining a drainage pipe rigidly to the thermosetting polymer, wherein an upper end of said drainage pipe is positioned at said apex point and said drainage pipe extends beyond or to said lower surface forming a lower end, said forming is made in such way that the plate member comprises the thermosetting polymer homogeneously seen in a direction from the extended lower surface up to the extended upper sloping surface, wherein in the drainage pipe extends through the thermosetting polymer; transporting said plate member to the building site; and installation of said plate member to the floor structure.

Preferably, the step of forming said plate member in said forming tool is followed by curing said plate member.

Suitably, the thermosetting polymer may be fully or partly replaced with glass (e.g. architectural glass such as armoured glass and/or wire glass or frosted glass or hard glass or glass for building purposes or other transparent glazing material), which may include reinforced, toughened and laminated glasses. glass fibers of low alkali may be embedded in thermosetting plastic matrix and low shrinkage glass as building material.

Preferaly, the drainage pipe comprises plastic, such as PVC, epoxy or other polymer material.

Suitably, the drainage pipe comprises steel, aluminuim, copper, bronze or other material or combinations thereof.

Other objects and advantages of the present invention will more fully appear from the following description in connection with the accompanying drawings.

### BRIEF DESCRIPTION OF THE DRAWINGS

The present invention will now be described by way of examples with references to the accompanying schematic drawings, of which:
FIG. 1a illustrates a drainage gully according to prior art;
FIG. 1b illustrates an enlarged view of the gully in FIG. 1a;
FIG. 2 illustrates in a view from above a mounting of a waste-water gully and tiled floor according to prior art;
FIG. 3 illustrates a cross-section of a modular plate member according to one aspect of the present invention;
FIG. 4 illustrates in a view from above a drainage hole floor module system according to one aspect of the present invention;
FIGs. 5a to 5c illustrate in cross-sectional side views modular plate members according to further aspects of the present invention;
FIGs. 6a to 6c illustrate the forming of the modular plate member according to one aspect;
FIG. 7 illustrates from above a production line for producing the modular plate member in FIG. 6c;
FIG. 8 illustrates the forming of the modular plate member according to a further aspect;
FIG. 9 illustrates a block diagram describing installation of a drainage hole floor module onto a floor structure of a building site according to one aspect;
FIG. 10 illustrates in a cross-sectional side view a modular plate member according to one aspect of the present invention; and
FIG. 11 illustrates the rigidity of the plate member and its horizontal plane relative the predetermined inclination of the upper surface.

### DETAILED DESCRIPTION

Hereinafter, embodiments of the present invention will be described in detail with reference to the accompanying drawings, wherein for the sake of clarity and understanding of the invention some details of no importance are deleted from the drawings.

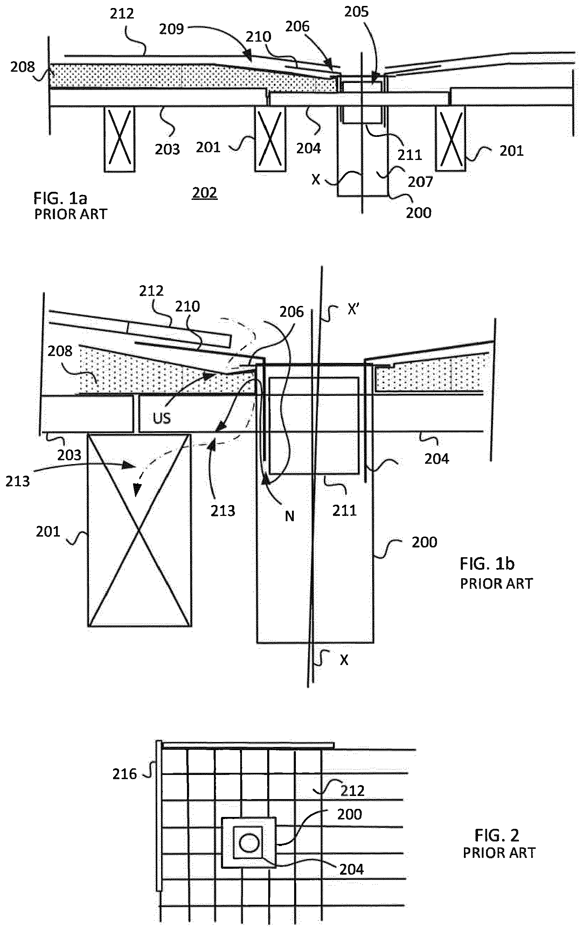

FIG. 1a illustrates a waste-water drainage gully pipe 200 according to prior art. A system of timber joists 201 of a building site 202 is arranged for carrying particle board floor elements 203. An alignment board 204 having an aperture 205, through which the gully pipe 200 is inserted, is positioned onto two timber joists 201. The gully pipe 200 comprises an upper flange 206 and an outer envelope surface 207. The particle board floor elements 203 are mounted edge to edge with the alignment board 204. A screeded filler 208 or concrete is applied onto the particle board floor elements 203 and onto the alignment board 204 and around the gully pipe 200 and the filler 208 is formed with a sloping surface 209 sloping towards the gully pipe 200. A membrane sleeve 210 is folded over the sloping surface 209 and into the interior of the gully pipe 200. A clamping ring 211 is mounted in the gully pipe 200 to clamp the membrane sleeve 210 tightly against the gully pipe 200 interior. Tiles 212 are mounted as a last step. FIG. 1b illustrates an enlarged view of the gully pipe 200 in FIG. 1a. During mounting of the gully pipe 200, the screeding filler 208 did not sufficiently fill up the area beneath the upper flange 206 of the gully pipe 200 resulting in an upward slope US and thereby are wrinkles in the membrane sleeve 210 produced with the effect that over time the membrane sleeve 210 material will break and waste water 213 will find its way to the system of timber joists 201, which thereby will be water-damaged. Furthermore, during mounting, the membrane sleeve 210 was erroneously cut too narrow N and the clamping ring 211 was not properly mounted wherein waste water 213 will find its way to the system of timber joists 201 as well.

FIG. 2 illustrates in a view from above a mounting of a waste-water gully 200 and tiled 212 floor according to prior art. An alignment board (see FIG. 1a) comprising the waste-water gully 200 is mounted on the floor structure (not shown). A mounting procedure similar to that of the steps made above in conjunction with FIG. 1a is performed and finally tiles 212 are fixed onto the sloping surface. During mounting of the waste-water gully 200 and the alignment board 204, the latter was fastened asymmetrical relative the outer floor perimeter boundary 216 (walls of the room), wherein tiles 212 adjacent the waste-water gully 200 must be additionally cut for mating to the latter. Furthermore, the asymmetrical appearance is neither desired from an aesthetical point of view.

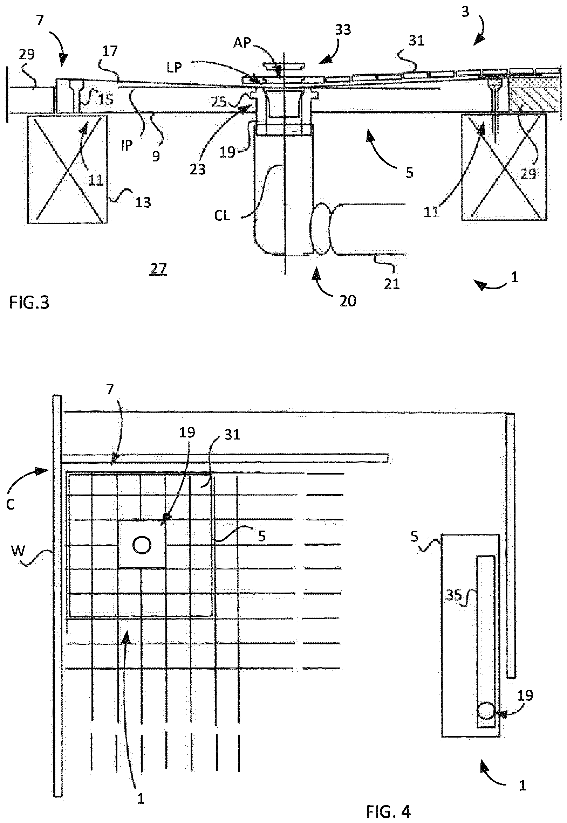

FIG. 3 schematically illustrates a cross-section of a modular plate member 1 according to one aspect of the present invention. There is shown a drainage hole floor module system 3 including a plate member 5, which exhibits a flat spatial geometry forming an edge region 7. In this case, the geometry in plane forms a square plate member (seen from above, see for example such geometry in FIG. 4). The plate member 5 further exhibits an extended lower surface 9 being provided with a horizontal floor structure surface plane mounting area (horizontal surface plane) 11 entirely being adapted for mounting to a separate floor structure 13 (in this embodiment just a region of the horizontal surface plane 11 is used for mounting to the floor structure). Prefabricated fixing bores 15 are provided in the edge region 7. The plate member 5 is formed with an extended upper sloping surface 17 converging to an apex point AP being defined as a point determined by an intersection between an axial centre line CL of a drainage pipe 19 (the material of which in this embodiment comprises stainless steel) and an imaginary plane IP extending horizontally from the lowest position LP of the sloping surface 17. The drainage pipe 19 extends from the apex point AP through the plate member 5 and is waterproof bonded thereto. The drainage pipe 19 extends from the upper surface 17 to the lower surface 9 and further below the plate member 5 and comprises a coupling device 20 adapted for coupling to a separate plumbing system 21. The drainage pipe 19 comprises an envelope surface 23 which comprises an anchoring element 25 (in this embodiment a flange) radially protruding into the thermosetting polymer of the plate member 5. The epoxy of plate member 5 and the stainless steel of the drainage pipe 19 material cling extremely well together providing a strong and tight adhesion by intermolecular forces. In such way is achieved a waterproof modular plate member 1 that can be mounted at a building site 27 extremely cost-effective, wherein is provided proper inclination of the upper sloping surface 17 and the floor structure 13 is protected from water-damage. The edge region 7 is partly or entirely adapted for edge-to-edge mounting to a separate floor element 29. The above-mentioned upper sloping surface 17 exhibits a predetermined inclination relative the horizontal floor structure surface plane mounting area 11. Furthermore, the plate member 5 comprises a thermosetting polymer and in this case it is an epoxy reinforced and filled with micro balloons (not shown) (a mixture of glass bubbles in epoxy resin and hardener). Also other fillers can be used, such as sand, glass fibres and various groups of reinforcement elements. Tiles 31 are applied onto the modular plate member. A cover and grid 33 is arranged upon the drainage pipe 19.

FIG. 4 illustrates schematically in a view from above a drainage hole floor module system 3 according to one aspect of the present invention. The plate member 5 edge region 7 is marked with dashed and dotted line. The length of the edge region 7 is predetermined from actual standardized measure of tiles 31 to be applied. In this example the length of the edge region 7 permits 6x6 tiles 31. By using the modular plate member 5 and in mounting of the latter in corners C there is always guaranteed that the drainage pipe 19 will be positioned symmetrically and at standardized distance from the wall W wherein the tiles 31 do not have to be cut. In FIG. 4 is also shown a modular plate member 1 in the form of an elongated rectangular plate member 5. Such embodiment of the modular plate member 1 is suitably applied in a linear shower compartment. In such case the drainage pipe 19 member is part of an elongated trough 35, which is moulded to the plate member 5 (or just countersunk in between the tiles and flush with them).

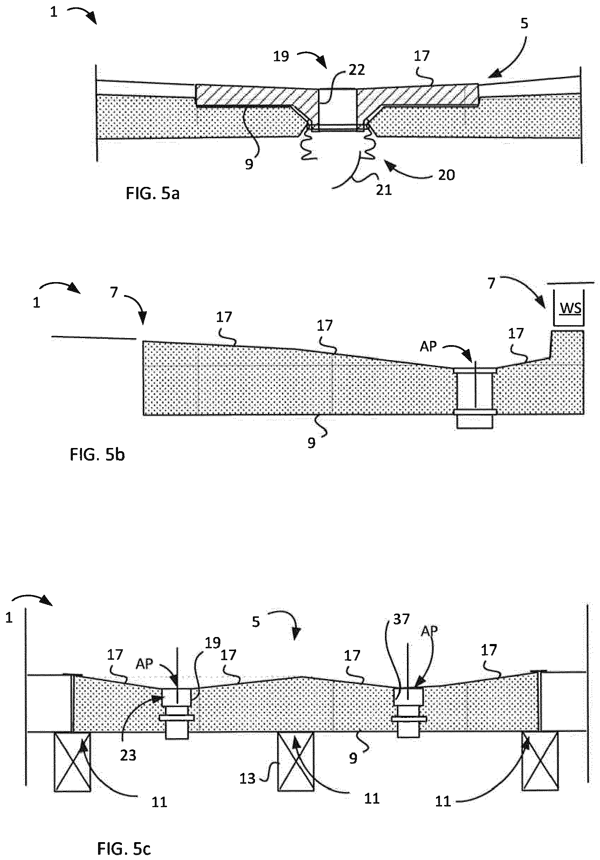

FIGs. 5a to 5c schematically illustrate in cross-sectional side views modular plate members 1 according to further aspects of the present invention. FIG. 5a illustrates a modular plate member 1 formed with a drainage pipe 19 member wherein the interior side wall 22 of the latter comprises the material of the plate member 5. The drainage pipe 19 extends from the upper sloping surface 17 further below the plate member 5 lower surface 9 and comprises a plumbing system 21 coupling device 20 for coupling to the plumbing system 21. FIG. 5b illustrates a modular plate member 1 exhibiting a flat spatial geometry forming an edge region 7 and an extended lower surface 9 and an extended upper sloping surface 17 converging to an apex point AP. One edge region 7 mates with a system of wall sections WS. FIG. 5c illustrates a plate member 5 comprising two drainage pipes 19. The drainage pipe 19 members are formed as through holes each comprising a drainage pipe of glass fibre reinforced thermosetting polymer and/or bronze and/or other material suitable for an attraction process and adhesion of the thermosetting polymer of the plate member 5 and the drainage pipe 19 envelope surface 23. In such way the drainage pipes 19 are bond to the plate member 5 in a sealed manner and is rigidly and permanently bond to the inner sides 37 of the respective through hole. The plate member 5 comprises epoxy and reinforcement elements (not shown) embedded in the epoxy. The lower surface 9 is provided with a horizontal surface plane floor structure mounting area 11 for mounting to a floor structure 13. The upper sloping surface 17 exhibits a predetermined inclination relative the horizontal surface plane floor structure mounting area 11. Respective drainage pipe 19 extends from an apex point AP through the plate member 5 and is waterproof bonded thereto.

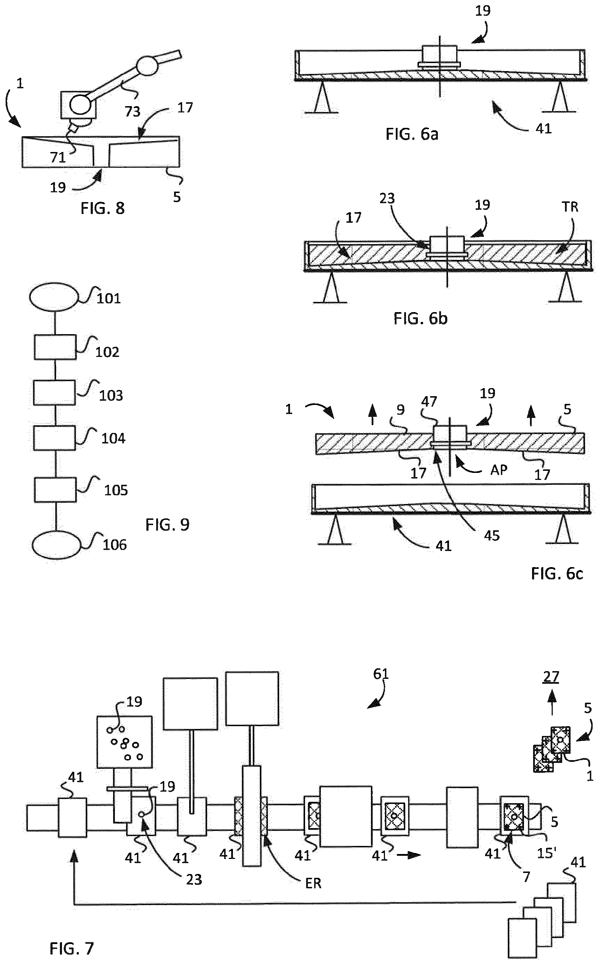

FIGs. 6a to 6c schematically illustrate the forming of a plate member 5 of the modular plate member 1 according to one aspect. There is shown in FIG. 6a a mould forming tool 41 provided for forming and production of the plate member 5 up-side down (see FIG. 6c). A drainage pipe 19 is positioned centrally in the mould forming tool 41. In FIG. 6b is shown that a thermosetting resin TR has been added to the mould forming tool 41 forming the sloping surfaces 17 with proper inclination and at the same time the thermosetting resin TR surrounds the drainage pipe 19 in contact tightly around (and against) the envelope surface 23 of the drainage pipe 19. In Fig. 6c the plate member 5 has been cured and is removed from the mould forming tool 41. The lower surface 9 of the plate member 5 is now predetermined in plane relative the sloping surface 17. The forming of the plate member 5 in the mould forming tool 41 has been made so that the plate member 5 will exhibit a flat spatial geometry having the extended lower surface 9 and the extended upper sloping surface 17 converging to an apex point AP and in the same forming step permanently joining the drainage pipe 19 rigidly to the thermosetting polymer TR, wherein an upper end 45 of said drainage pipe 19 is positioned at said apex point AP and extends to said lower surface 9 forming a lower end 47.

FIG. 7 schematically illustrates from above a semi-automatic production line 61 for producing the modular plate member 1 in FIG. 6c. A mould 41 having sloping bottom side is positioned in the manufacture line in a work-shop. Drainage pipes 19 are applied piece by piece to the apex point after their preparation of the envelope surface 23. Epoxy resin ER (or other thermosetting polymer) is applied into the mould 41. The plate member 5 is cured and fastener holes 15' are drilled in edge regions 7 of the plate member 5. The plate members 5 are transported to a building site 27.

FIG. 8 illustrates the forming of a plate member 5 of the modular plate member 1 according to a further aspect. In this embodiment the plate member 5 is in a first step made in one block of thermosetting plastic. Thereafter a cutter 71 of a robot 73 mills off material for forming the upper sloping surface 17 and the drainage pipe member 19.

FIG. 9 illustrates a block diagram showing the production of a drainage hole floor module in a floor structure of a building site according to one aspect. Step 101 is starting of the method. Step 102 is providing a forming tool for manufacture of a plate member comprising a thermosetting polymer. Step 103 is forming of said plate member in said forming tool into a flat spatial geometry having an extended lower surface and an extended upper sloping surface converging to an apex point and in the same forming step permanently joining a drainage pipe rigidly to the thermosetting polymer, wherein an upper end of said drainage pipe is positioned at said apex point and extends beyond or to said lower surface forming a lower end. Step 104 is transporting said plate member to the building site and Step 105 is installation of said plate member to the floor structure. Step 106 marks the end of the method wherein the drainage pipe has been connected to a plumbing system and the edge portions is joined to adjacent floor elements onto which tiles are applied.

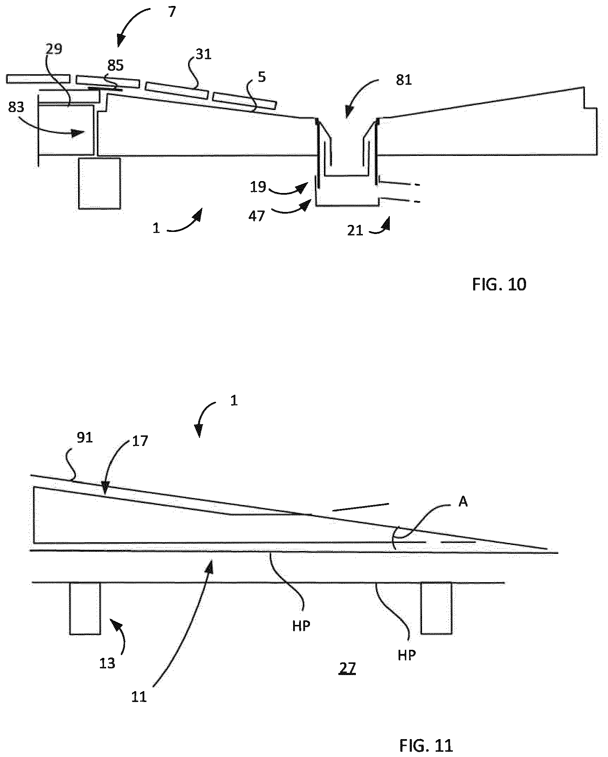

FIG. 10 schematically illustrates in a cross-sectional side view a modular plate member 1 according to one aspect of the present invention. A drainage pipe 19 is rigidly bonded to the plate member 5. A plumbing pipe 21 is connected to the lower portion 47 of the drainage pipe 19. A waste collection trap 81 is mounted in the drainage pipe 19. The edge region 7 of the plate member 5 comprises a separate floor element edge-to-edge mounting surface 83 to which surface a floor element 29 being joined. A sealing tape 85 is applied over the joint between the plate member 5 and the floor element 29. Optionally, tiles 31 are fixed to the floor elements 29 and the plate member 5.

FIG. 11 schematically illustrates the rigidity of a modular plate member 1 and the horizontal plane HP of the modular plate member 1 and that of the building site 27 relative the predetermined inclination 91 angle A of the upper surface 17. The horizontal floor structure surface plane mounting area 11 of the modular plate member 1 will have an extension in plane corresponding with the horizontal plane HP of the building site 27 when mounted onto the floor structure 13. As the upper sloping surface 17 exhibits a predetermined inclination 91 angle A relative the horizontal floor structure surface plane mounting area 11 of the modular plate member 1 (which is determined in the process of moulding the plate member 5) and the horizontal floor structure surface plane mounting area 11 of the modular plate member 1 is in plane with the horizontal plane HP of the building site 27 after mounting, also the inclination angle A of the sloping surface 17 automatically will be within standardized tolerances for that building site 27. In such way proper run-off of waste water is achieved.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims. The plate member module may be permanently glued to the floor structure or it may be screwed to the floor structure for demountable application.

## Claims

1. A drainage hole floor module system (3) including:
- a plate member (5) which exhibits a flat spatial geometry forming an edge region (7) and an extended lower surface (9) and an extended upper sloping surface (17) converging to an apex point (AP);
- the edge region (7) comprises a separate floor element edge-to-edge mounting surface (83);
- a drainage pipe (19) extends from said apex point (AP) to or beyond said lower surface (9) forming a lower end (47) comprising a plumbing system (21) coupling device;
- the lower surface (9) comprises a horizontal floor structure mounting surface (11), wherein the upper sloping surface (17) exhibits a predetermined inclination (A) relative the horizontal floor structure mounting surface (11);
- the plate member (5) comprises a thermosetting polymer;
- the drainage pipe member (19) extends from said apex point (AP) through the plate member (5) and is waterproof bonded to said thermosetting polymer;
- the plate member (5) is formed with the drainage pipe (19) and an interior side wall (22) of the drainage pipe (19) comprises the material of the plate member (5);
- the drainage pipe (19) is formed as a through hole comprising a wall of thermosetting polymer.

2. The system according to claim **1**, **wherein** the drainage pipe (19) comprises plastic, such as PVC, epoxy or other material or combinations thereof.

3. The system according to claim **1**, **wherein** the plate member (5) further comprises reinforcement elements embedded in the thermosetting polymer, which elements comprises carbon fibres and/or micro balloons and/or glass fibres and/or fibre-like nano elements and/or sand.
